# EUROPÄISCHE PATENTANMELDUNG

(11) **EP 1 241 036 A1**
(43) Veröffentlichungstag der Anmeldung: **18.09.2002**
(21) Anmeldenummer: 02003425.2
(22) Anmeldetag: 14.02.2002
(51) Int. Cl.: B60J 7/20

(54) **Verdeckkastendeckel in einem Cabriolet-Fahrzeug**

(30) Priorität: 13.03.2001 DE 10112344
(71) Anmelder: CTS Fahrzeug-Dachsysteme GmbH, 21079 Hamburg (DE)
(72) Erfinder: Halbweiss, Thomas, 71686 Remseck (DE); Bernhardt, Alexander, 75173 Pforzheim (DE); Hasselgruber, Andreas, 71735 Eberdingen-Nussdorf (DE)
(74) Vertreter: Müller, Gottfried

(57) **Zusammenfassung**

Ein Verdeckkastendeckel (1) in einem Cabriolet-Fahrzeug mit einem zwischen einer Schließstellung und einer Ablagestellung verstellbaren Fahrzeugdach verschließt einen Stauraum, in welchem das Fahrzeugdach in seiner Ablagestellung ablegbar ist. Der Verdeckkastendeckel (1) wird bei der Überführung des Fahrzeugdaches zwischen Schließ- und Ablagestellung mittels eines ansteuerbaren, hydraulischen Stellgliedes (5) selbsttätig um eine Drehachse (3) aufgeschwenkt bzw. geschlossen.

Zusätzlich zu dem hydraulischen Stellglied (5) ist ein den Verdeckkastendeckel (1) in seine Öffnungsposition beaufschlagendes Kraftelement (11) vorgesehen.

## Beschreibung

Die Erfindung bezieht sich auf einen Verdeckkastendeckel in einem Cabriolet-Fahrzeug nach dem Oberbegriff des Anspruches 1.

In der Druckschrift DE 196 35 869 C1 wird ein Verdeckkastendeckel beschrieben, der einen Heckstauraum verschließt, in welchen das Fahrzeugdach in Cabriolet-Stellung überführt wird. Zum Öffnen des Fahrzeugdaches wird der Verdeckkastendeckel, welcher schwenkbar an der Fahrzeugkarosserie gelagert ist, mit Hilfe eines hydraulischen Stellantriebes um seine Schwenkachse geöffnet, woraufhin die Bauteile des Fahrzeugdaches in den Heckstauraum überführt werden können. Anschließend wird der Verdeckkastendeckel wieder geschlossen. Sowohl die Öffnungsbewegung als auch die Schließbewegung des Verdeckkastendeckels wird in Abhängigkeit von der aktuellen Position des Fahrzeugdaches durch eine entsprechende Ansteuerung des hydraulischen Stellgliedes selbsttätig durchgeführt. Ein aktives Eingreifen des Fahrers zum Öffnen und Schließen des Deckels ist nicht erforderlich.

Bei einem Ausfall des hydraulischen Stellelementes muss der Verdeckkastendeckel von Hand geöffnet werden, wofür zum Teil erhebliche Kräfte aufzuwenden sind. Insbesondere im Bereich der maximalen Öffnungsstellung des Verdeckkastendeckels kann der Kraftaufwand nochmals anwachsen, da gegebenenfalls in dieser Stellung der Deckel sich in der Nähe seiner Totpunktlage befindet.

In der Druckschrift DE 44 45 944 C1 wird ein Heckdeckel beschrieben, welcher einen Aufnahmeraum für ein verstellbares Fahrzeugdach überdeckt und über ein ansteuerbares hydraulisches Stellglied zu öffnen und zu schließen ist. Das hydraulische Stellglied greift an einem Hilfsrahmen des Heckdeckels an und verschwenkt diesen zum Überführen in die Öffnungsstellung um eine quer verlaufende Drehachse. Der Heckdeckel ist fest mit dem Hilfsrahmen gekoppelt. Über das hydraulische Stellglied ist eine automatische Öffnungs- und Schließbewegung einleitbar.

Des Weiteren ist als zusätzliches Stützglied eine Gasdruckfeder vorgesehen, die ebenfalls an dem Hilfsrahmen des Heckdeckels angreift und diesen in Richtung seiner Öffnungsstellung beaufschlagt. Um einen möglichst großen Durchtritt für die Überführung des Fahrzeugdaches zwischen geschlossener und abgelegter Position freizugeben, werden sowohl das hydraulische Stellglied als auch die Gasdruckfeder in ihre ausgefahrene Position verstellt. Aufgabe der Gasdruckfeder ist es, den Heckdeckel an einer weiteren Stelle zusätzlich zu dem hydraulischen Stellglied anzuheben. Die Angriffspunkte von hydraulischem Stellglied und Gasdruckfeder an dem Hilfsrahmen des Heckdeckels sind verhältnismäßig weit beabstandet, mit der Folge, dass bei einem Ausfall des hydraulischen Stellgliedes eine hohe manuelle Kraft zum Öffnen des Heckdeckels aufgebracht werden muss. Die Gasdruckfeder bietet in diesem Fall keine Unterstützung.

Der Erfindung liegt das Problem zugrunde, einen Verdeckkastendeckel für ein Cabriolet-Fahrzeug anzugeben, welcher sich auch bei einem Ausfall des hydraulischen Antriebes problemlos öffnen lässt. Zweckmäßig soll der maximale Öffnungswinkel des Verdeckkastendeckels bei einem Ausfall des Antriebes begrenzt werden.

Dieses Problem wird erfindungsgemäß mit den Merkmalen des Anspruches 1 gelöst. Zweckmäßige Weiterbildungen sind den Unteransprüchen zu entnehmen.

Das zusätzlich zu dem hydraulischen Stellglied, über das der Verdeckkastendeckel selbsttätig geöffnet werden kann, vorgesehene Kraftelement beaufschlagt den Verdeckkastendeckel in Richtung seiner Öffnungsposition und unterstützt dadurch die Aufschwenkbewegung des Deckels, so dass insbesondere bei einem Ausfall des hydraulischen Stellgliedes der manuell aufzubringende Kraftaufwand verringert wird. Der Deckel kann dadurch erheblich leichter von Hand geöffnet werden. Zusätzlich wird auch das hydraulische Stellglied entlastet, da bei einer regulären Öffnungsbewegung des Deckels das Kraftelement und das hydraulische Stellglied beide in die gleiche Richtung wirken.

Desweiteren ist vorgesehen, dass am Verdeckkastendeckel ein Wipphebel gelenkig gelagert ist, an dessen entgegengesetzten Enden das hydraulische Stellglied und das Kraftelement angreifen. Über die Ausführung des Wipphebels und/oder die Wipphebelbewegung begrenzende Anschläge kann der maximal erreichbare Öffnungswinkel des Verdeckkastendeckels bei einer Beaufschlagung über das hydraulische Stellglied und einem manuellen Öffnen des Deckels unterschiedlich groß ausgeführt werden. Es ist insbesondere möglich, bei einem manuellen Öffnen des Deckels einen geringeren Öffnungswinkel zuzulassen als bei einem hydraulisch unterstützten Öffnungsvorgang, um beim manuellen Öffnungsvorgang den Bereich der Totpunktlage zu vermeiden.

Die unterschiedlichen Stellbewegungen kommen dadurch zustande, dass bei einer Beaufschlagung über das hydraulische Stellglied der Wipphebel in eine andere Richtung verschwenkt wird als bei einem Ausfall des hydraulischen Stellgliedes und einer ausschließlichen Beaufschlagung über das Kraftelement bzw. einer unterstützenden, manuell ausgeführten Öffnungsbewegung.

Bevorzugt wird die Wipphebelbewegung, welche bei einem Ausfall des hydraulischen Stellgliedes durch das Kraftelement erzeugt wird, durch einen Anschlag begrenzt, um bei einem manuellen Öffnen einen geringeren maximalen Öffnungswinkel zuzulassen als bei einem hydraulischen Öffnen des Deckels. Der Anschlag kann insbesondere unmittelbar am Verdeckkastendeckel selbst angeordnet sein, so dass der Wipphebel beim manuellen Öffnen gegen diesen Anschlag anfährt. Zusätzlich oder alternativ zu dieser Ausführung kann der Anschlag am Kraftelement angeordnet werden bzw. an diesem angreifen, um die Bewegung des Kraftelements zu begrenzen. Über den Anschlag bzw. die Anschläge kann die maximale Öffnungsbewegung in jede Schwenkrichtung des Wipphebels beeinflusst werden.

Das Kraftelement weist vorteilhaft einen ausfahrbaren Teleskoparm auf, dessen Ausfahrbewegung durch den Anschlag begrenzt werden kann.

Bevorzugt ist am Deckel ein weiterer Anschlag auf derjenigen Seite des Wipphebels vorgesehen, an der das hydraulische Stellglied angreift.

Es kann zweckmäßig sein, am Wipphebel eine zusätzliche Schenkelfeder angreifen zu lassen, die den Wipphebel in die gleiche Drehrichtung beaufschlagt wie das am Wipphebel angreifende, vorteilhaft mit einem Teleskoparm ausgestattete Kraftelement. Hierdurch wird bei einem Ausfall des hydraulischen Antriebes eine Unterstützung der manuell durchzuführenden Öffnungsbewegung erzielt.

Der Angriffspunkt des hydraulischen Stellgliedes am Wipphebel liegt vorteilhaft näher an der Drehachse des Verdeckkastendeckels als der Angriffspunkt des Kraftelementes am Wipphebel, so dass bereits mit einem vergleichsweise geringen Hub des hydraulischen Stellgliedes eine maximale Öffnung des Verdeckkastendeckels erzielt werden kann.

Weitere Vorteile und zweckmäßige Ausführungen sind den weiteren Ansprüchen, der Figurenbeschreibung und den Zeichnungen zu entnehmen. Es zeigen:
- Fig. 1: einen Ausschnitt eines Verdeckkastendeckels, welcher einen Stauraum zur Ablage eines Cabriolet-Fahrzeugdaches abdeckt, einschließlich Deckelantrieb, bestehend aus einem hydraulischen Stellglied und einer Gasfeder, bei geschlossenem Verdeckkastendeckel,
- Fig. 2: der Verdeckkastendeckel in seiner maximal aufgeschwenkten Öffnungsposition, beaufschlagt vom hydraulischen Stellglied,
- Fig. 3: der Verdeckkastendeckel in geschlossener Stellung, wobei das hydraulische Stellglied außer Funktion gesetzt ist und der Deckel zunächst nur von der Gasfeder beaufschlagt ist,
- Fig. 4: der Verdeckkastendeckel in maximal geöffneter Position bei außer Funktion gesetztem hydraulischen Stellglied.

In den folgenden Figuren sind gleiche Bauteile mit gleichen Bezugszeichen versehen.

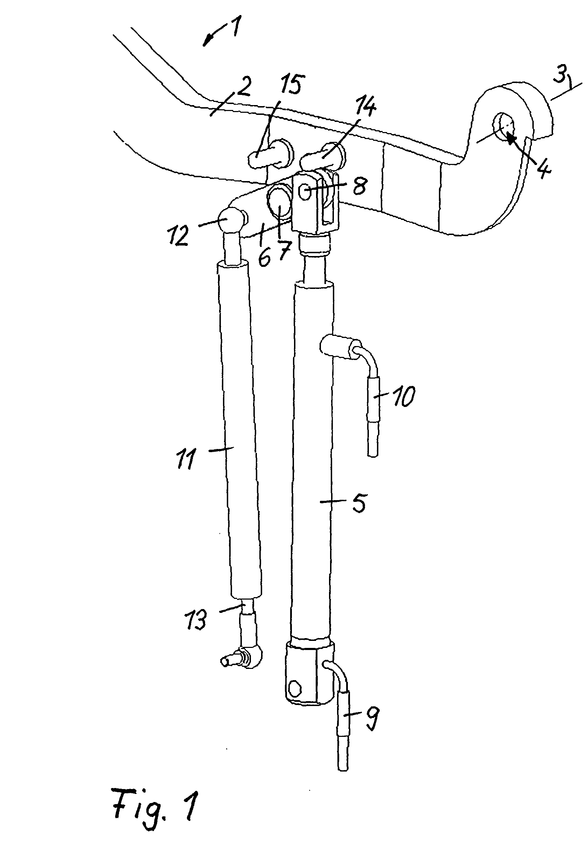

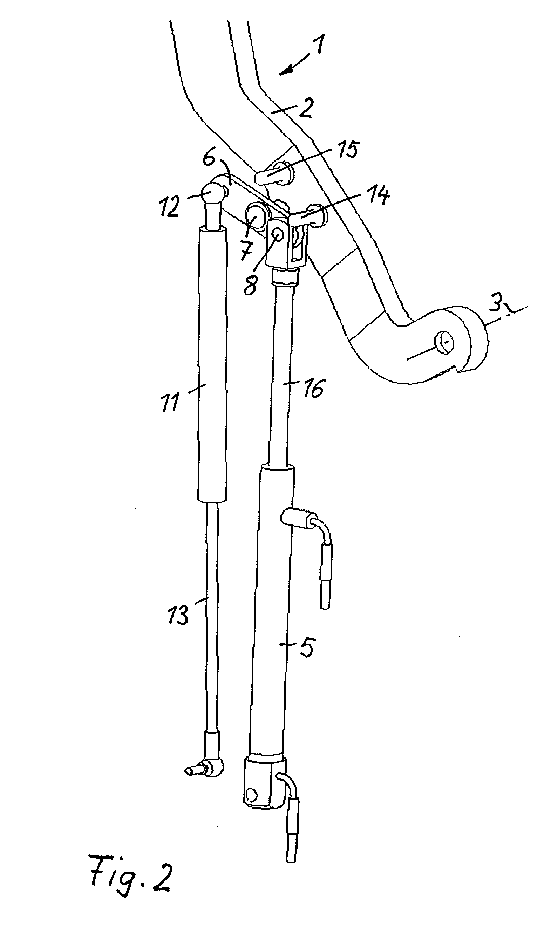

Gemäß Fig. 1 ist der Verdeckkastendeckel 1, von dem ein Schwenkarm 2 dargestellt ist, über ein Gelenk 4 an der Fahrzeugkarosserie angebunden und um eine Drehachse 3 drehbar gelagert. Der Verdeckkastendeckel 1 ist beispielsweise als Heckdeckel ausgeführt und deckt einen Stauraum zur Aufnahme eines Cabriolet-Fahrzeugdaches in Öffnungs- bzw. Ablagestellung des Daches ab. Der Verdeckkastendeckel 1 ist über ein hydraulisches Stellglied 5 aus der in Fig. 1 gezeigten Schließposition des Deckels in die in Fig. 2 gezeigte Öffnungsposition zu verstellen. Das hydraulische Stellglied 5 stützt sich an der Fahrzeugkarosserie ab und greift über ein Gelenk 8 an einem Ende eines Wipphebels 6 an, der über ein Drehgelenk 7 schwenkbar mit dem Schwenkarm 2 des Verdeckkastendeckels 1 verbunden ist. Das Gelenk 8 bildet einen Kraftangriffspunkt des hydraulischen Stellgliedes 5 am Wipphebel 6. Das hydraulische Stellglied 5 wird über Zu- und Abfuhrleitungen 9 und 10 mit Hydraulikfluid versorgt. Zweckmäßig erfolgt die Betätigung des hydraulischen Stellgliedes 5 selbsttätig durch Ansteuerung über eine Regelund Steuereinheit in Abhängigkeit von einer aktuellen Bewegung des Fahrzeugdaches bei der Überführung zwischen Schließ- und Ablagestellung.

Weiterhin ist ein Kraftelement 11 vorgesehen, welches etwa parallel zum hydraulischen Stellglied 5 angeordnet ist und im Ausführungsbeispiel als Gasfeder ausgeführt ist. Das Kraftelement 11 ist über ein Gelenk 12 gelenkig mit dem Wipphebel 6 verbunden. Der Kraftangriffspunkt des Kraftelements 11 am Wipphebel 6 befindet sich auf der dem Gelenk 8 des hydraulischen Stellgliedes 5 gegenüberliegenden Seite am Wipphebel. Das Kraftelement 11 ist auf seiner dem Wipphebel 6 abgewandten Seite ebenfalls karosserieseitig abgestützt. Das Kraftelement 11 weist einen ausfahrbaren Teleskoparm 13 auf, um bei einer Öffnungsbewegung des Verdeckkastendeckels 1 eine dem hydraulischen Stellglied 5 entsprechende Elongation ausführen zu können. Das Kraftelement 11 beaufschlagt den Verdeckkastendeckel 1 in Richtung seiner Öffnungsstellung.

Im Normalfall, bei funktionstüchtigem hydraulischen Stellglied 5, wird zu Beginn der Öffnungsbewegung der Wipphebel 6 vom hydraulischen Stellglied 5 um sein Gelenk 7 in der gezeigten Perspektive im Gegenuhrzeigersinn verschwenkt; hierbei wird das Gelenk 8 des hydraulischen Stellgliedes 5 am Wipphebel 6 nach oben bis zu einem Anschlag 14, welcher fest am Schwenkarm 2 des Verdeckkastendeckels 1 angeordnet ist, verfahren. Ein weiterer Anschlag 15 befindet sich ebenfalls fest am Schwenkarm 2 oberhalb des Wipphebels 6 auf der Seite des Kraftelements 11.

In Fig. 2 hat der Verdeckkastendeckel 1 seine maximale Öffnungsposition erreicht, welche durch Beaufschlagung mit dem hydraulischen Stellglied 5 zu erzielen ist. Das hydraulische Stellglied 5 mit seinem Teleskoparm 16 ist vollständig ausgefahren, wobei sich der Wipphebel 6 auf der Seite des hydraulischen Stellgliedes 5 am Anschlag 14 am Schwenkarm 2 abstützt. Da das Kraftelement 11 in Richtung seiner ausgefahrenen Stellung kraftbeaufschlagt ist, ist der Teleskoparm 13 des Kraftelementes 11 ebenfalls vollständig ausgefahren. In der in Fig. 2 dargestellten Position ist der Teleskoparm 13 des Kraftelements 11 maximal ausgefahren und vorteilhaft durch einen internen, im Kraftelement angeordneten Anschlag begrenzt, wodurch verhindert wird, dass das Kraftelement 11 überstreckt wird und der Wipphebel gegen den Anschlag 15 auf der dem Kraftelement 11 zugeordnet Seite stößt.

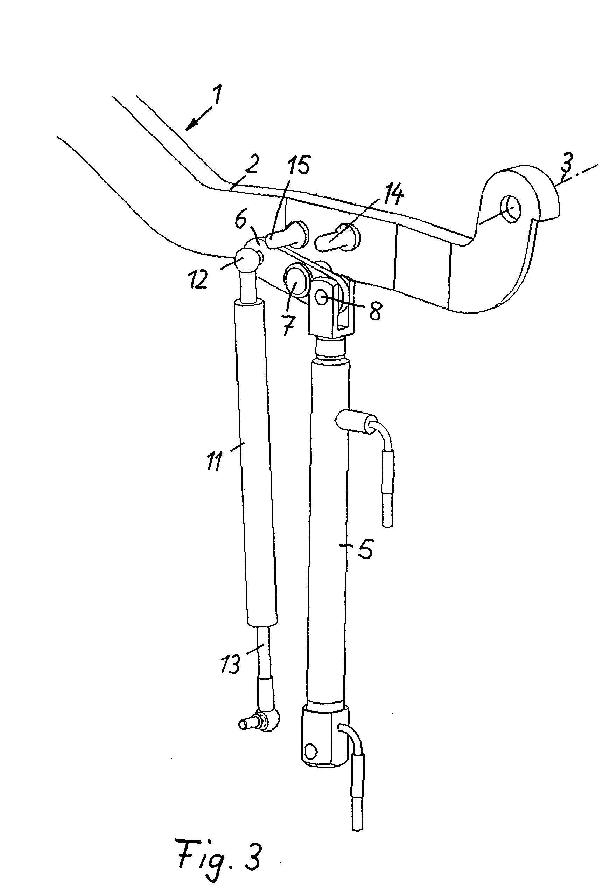

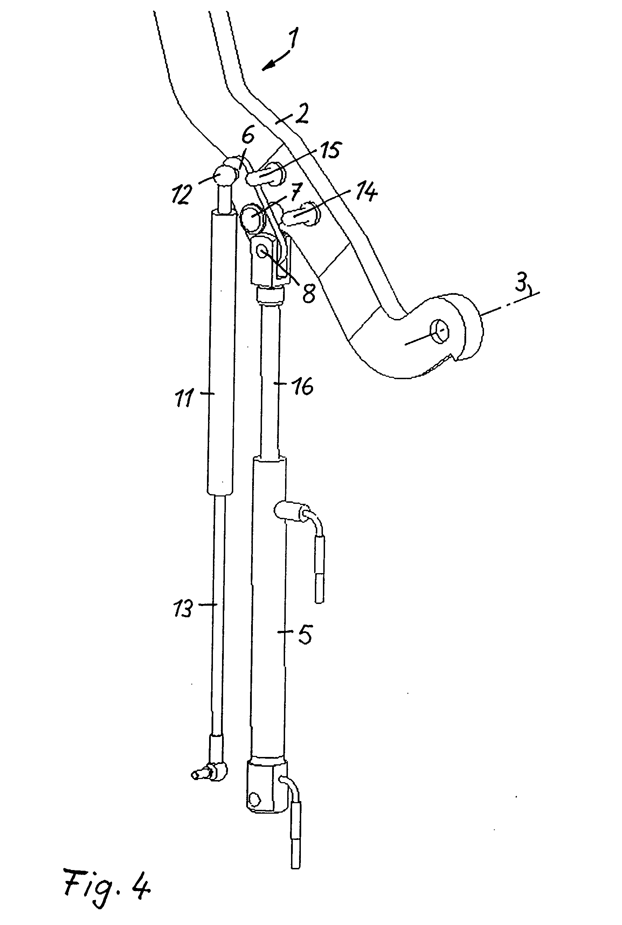

In den Fig. 3 und 4 ist die Situation dargestellt, dass das hydraulische Stellglied 5 außer Funktion gesetzt ist und bei einer manuellen Öffnung des Verdeckkastendeckels 1 der Teleskoparm 16 des hydraulischen Stellgliedes 5 ohne Kraft ausgefahren wird.

Wie Fig. 3 zu entnehmen, wird zu Beginn einer Öffnungsbewegung des Verdeckkastendeckels 1 der Wipphebel 6 durch Kraftbeaufschlagung über das Kraftelement 11 gegen den Anschlag 15 am Schwenkarm 2 verstellt, der sich auf der Seite des Kraftelementes 11 oberhalb des Wipphebels 6 befindet. Da das hydraulische Stellglied 5 außer Kraft gesetzt ist, verharrt der Teleskoparm des hydraulischen Stellgliedes 5 zunächst in seiner eingefahrenen Position.

Fig. 4 zeigt die maximale Öffnungsposition, welche ohne Unterstützung des hydraulischen Stellgliedes 5 zu erreichen ist. Diese Öffnungsposition unterscheidet sich vorteilhaft von derjenigen aus Fig. 2, welche durch eine Betätigung des hydraulischen Stellgliedes 5 erreicht wird und bei der der Wipphebel 6 in die andere Richtung gegen den Anschlag 14 verschwenkt wird. Die maximale Öffnungsstellung, welche ohne Unterstützung des hydraulischen Stellgliedes 5 zu erreichen ist, ist insbesondere kleiner als die Öffnungsstellung, welche mit Unterstützung des hydraulischen Stellgliedes erzielt wird. Der unterschiedliche Öffnungsgrad wird durch Verschwenkung des Wipphebels 6 in unterschiedliche Richtungen erzielt, wobei jeder Schwenkrichtung eine unterschiedliche Begrenzung zugeordnet wird. Gemäß Fig. 4 wird der maximale Öffnungswinkel des Verdeckkastendeckels 1 durch die maximale Elongation des Teleskoparms 13 des Kraftelementes 11 begrenzt, die insbesondere durch ein Anstoßen des Wipphebels 6 gegen den Anschlag 15 zustande kommt. Während der Öffnung des Verdeckkastendeckels 1 wird zwar auch der Teleskoparm 16 des hydraulischen Stellgliedes 5 ausgefahren; hierbei wird jedoch auf Grund der Außerfunktionsstellung des hydraulischen Stellgliedes 5 keine unterstützende Öffnungskraft ausgeübt. Der Wipphebel 6 stößt daher nicht gegen den Anschlag 14 auf der dem hydraulischen Stellglied 5 zugeordneten Seite an.

Am Wipphebel 6 kann eine Schenkelfeder angreifen, die den Wipphebel 6 um sein Drehgelenk 7 in Richtung einer Auslenkung hin zum Anschlag 15 beaufschlagt.

## Patentansprüche

1. Verdeckkastendeckel in einem Cabriolet-Fahrzeug mit einem zwischen einer Schließstellung und einer Ablagestellung verstellbaren Fahrzeugdach, der einen Stauraum verschließt, in welchen das Fahrzeugdach in seiner Ablagestellung ablegbar ist, und der bei der Überführung des Fahrzeugdaches zwischen Schließ- und Ablagestellung mittels eines ansteuerbaren, hydraulischen Stellglieds (5) selbsttätig um eine Drehachse (3) aufgeschwenkt bzw. geschlossen wird, wobei ein zusätzliches, den Verdeckkastendeckel (1) in seine Öffnungsposition beaufschlagendes Kraftelement (11) vorgesehen ist,
**dadurch gekennzeichnet,**
**dass** am Verdeckkastendeckel (1) ein Wipphebel (6) gelenkig gelagert ist, an dessen entgegengesetzten Enden das hydraulische Stellglied (5) und das Kraftelement (11) angreifen.

2. Verdeckkastendeckel nach Anspruch 1,
**dadurch gekennzeichnet,**
**dass** das Kraftelement (11) einen ausfahrbaren Teleskoparm (13) aufweist und die Ausfahrbewegung des Teleskoparms (13) durch einen Anschlag (15) begrenzt ist.

3. Verdeckkastendeckel nach Anspruch 2,
**dadurch gekennzeichnet,**
**dass** der Anschlag (15) am Verdeckkastendeckel (1) angeordnet ist und die Drehbewegung des Wipphebels (6) in Richtung der Öffnungsposition des Deckels auf der Seite des Kraftelements (11) begrenzt.

4. Verdeckkastendeckel nach einem der Ansprüche 1 bis 3,
**gekennzeichnet durch**
einen weiteren Anschlag (14) zur Begrenzung der Drehbewegung des Wipphebels (6) auf der Seite des hydraulischen Stellglieds (5).

5. Verdeckkastendeckel nach Anspruch 3 und 4,
**dadurch gekennzeichnet,**
**dass** der dem hydraulischen Stellglied (5) zugeordnete Anschlag (14) eine größere, von dem Stellglied (5) verursachte Drehbewegung des Verdeckkastendeckels (1) erlaubt als der dem Kraftelement (11) zugeordnete Anschlag (15) bei einer manuellen Öffnungsbewegung des Verdeckkastendeckels (1).

6. Verdeckkastendeckel nach einem der Ansprüche 1 bis 5,
**dadurch gekennzeichnet,**
**dass** der Wipphebel (6) von einer Schenkelfeder in Richtung der Ausfahrstellung des Teleskoparms (13) des Kraftelements (11) beaufschlagt ist.

7. Verdeckkastendeckel nach einem der Ansprüche 1 bis 6,
**dadurch gekennzeichnet,**
**dass** der Angriffspunkt des hydraulischen Stellglieds (5) am Wipphebel (6) näher an der Drehachse (3) des Verdeckkastendeckels (1) liegt als der Angriffspunkt des Kraftelements (11) am Wipphebel (6).

8. Verdeckkastendeckel nach einem der Ansprüche 1 bis 7,
**dadurch gekennzeichnet,**
**dass** das Kraftelement (11) eine Gasfeder ist.
